# FASCICULE DE BREVET EUROPEEN

(11) **EP 0 451 057 B1**
(45) Date de publication et mention de la délivrance du brevet: **09.11.1994**
(21) Numéro de dépôt: 91400916.2
(22) Date de dépôt: 04.04.1991
(51) Int. Cl.: G07F 7/00

(54) **Système de paiement de services par téléphone**
System zum Bezahlen von Dienstleistungen per Telefon
System for paying services by telephone

(30) Priorité: 05.04.1990 FR 9004368
(43) Date de publication de la demande: 09.10.1991
(73) Titulaire: Bernard, Alain, F-75015 Paris (FR)
(72) Inventeur: Bernard, Alain, F-75015 Paris (FR)
(74) Mandataire: Signore, Robert

(56) Documents cités:
- EP-A- 0 216 521
- EP-A- 0 217 308
- EP-A- 0 318 454
- EP-A- 0 325 302
- FR-A- 2 592 188
- FR-A- 2 624 679

## Description

La présente invention a pour objet un système de paiement de services par téléphone.

Il existe aujourd'hui deux techniques pour le paiement par téléphone :
- dans la première, le prix de l'appel téléphonique est facturé, par l'opérateur du réseau, à un tarif qui lui permet de partager les recettes avec le prestataire de service. Cette technique est baptisée "kiosque" en France. Le service étant payé par le détenteur de l'abonnement téléphonique, lequel n'est pas toujours consulté lors de son utilisation, cette technique, si elle conduit à facturer des sommes trop élevées, peut donner lieu à des problèmes de refus de paiement de la part de l'abonné. Les services que l'on peut payer par le "kiosque" restent donc généralement de faible valeur,
- dans la seconde, l'appelant peut se faire reconnaître d'un opérateur, en lui communiquant son nom et un numéro de code secret. Le prestataire de service, souhaitant être payé à l'avance, aura pu demander une provision à son futur client, et lui aura communiqué ce numéro de code secret, que le client devra communiquer à une machine ou à une opératrice avant de pouvoir bénéficier du service souhaité. C'est le cas par exemple pour les demandes de renseignements adressées à la Société française "SVP". Cependant, la gestion des numéros d'abonnement est lourde. Par ailleurs, ces numéros de code restent difficilement confidentiels. Enfin, les clients ne sont pas toujours prêts à faire la démarche préalable d'abonnement pour attendre ensuite de recevoir un code.

L'invention a justement pour but de remédier à ces inconvénients en offrant un moyen de paiement rapide, anonyme et sûr.

A cette fin, l'invention propose un système de paiement de services par téléphone qui comprend tout d'abord des dispositifs électroniques portatifs ayant chacun une identité, une valeur nominale et une date de péremption, chaque dispositif étant capable d'émettre, sur commande de l'utilisateur, une séquence cryptée de tonalités acoustiques, cette séquence étant caractéristique de l'identité du dispositif, de la date d'utilisation et d'un service.

Un mode particulier de réalisation de tels dispositifs électroniques a été décrit dans la demande de brevet EP-A-0451056 déposée par Alain BERNARD, le jour du dépôt de la présente demande, et intitulée "Dispositif électronique téléphonique". Mais d'autres dispositifs peuvent être utilisés dès lors qu'ils remplissent les mêmes fonctions.

Le système de l'invention comprend encore des serveurs vocaux spécialisés dans un service particulier et reliés à une ligne téléphonique, ces serveurs pouvant être appelés par téléphone par un utilisateur et étant capables de recevoir la séquence cryptée de tonalités acoustiques émise par le dispositif électronique de l'appelant et de traduire cette séquence en données informatiques.

Ces serveurs vocaux peuvent être spécialisés, par exemple dans les paris sur les courses de chevaux comme, en France, le Pari Mutuel Urbain (PMU) ou dans les prévisions météorologiques, etc.

Le système comprend encore des ordinateurs affiliés à un service particulier et relié aux serveurs vocaux spécialisés dans ce service, par une ligne de transmission de données informatiques, ces ordinateurs étant aptes à définir une transaction correspondant au service en question.

Dans le cas de l'exemple précédent, ces ordinateurs affiliés seraient attachés au PMU et aux prévisions météorologiques.

Enfin, le système de l'invention comprend un ordinateur de gestion de comptes, ces comptes correspondant, d'une part, aux différents prestataires de service et, d'autre part, aux différents dispositifs électroniques portatifs ; cet ordinateur de gestion de comptes est relié aux ordinateurs affiliés aux différents services par des lignes de transmission de données d'où il reçoit, pour chaque transaction à effectuer, la séquence de données cryptées propre au dispositif électronique portatif utilisé ainsi que les caractéristiques de la transaction à effectuer ; cet ordinateur de gestion de comptes est apte à décrypter la séquence de données qu'il reçoit, à identifier le compte correspondant et à débiter ou créditer celui-ci selon la transaction à effectuer.

Les lignes de transmission de données sont par exemple des réseaux tels que TRANSPAC.

De préférence, le système comprend en outre au moins un serveur vocal interactif directement relié à l'ordinateur de gestion des comptes, ce serveur permettant seulement de donner à l'utilisateur appelant la position du compte correspondant au dispositif portatif utilisé.

De toute façon, les caractéristiques et avantages de l'invention apparaîtront mieux à la lumière de la description qui va suivre, d'un exemple de réalisation donné à titre explicatif et nullement limitatif. Cette description se réfère à des dessins annexés sur lesquels :
- la figure 1 représente la structure générale d'un système conforme à l'invention,
- les figures 2a, 2b, 2c montrent plus particulièrement un système de prise de paris sur les courses.

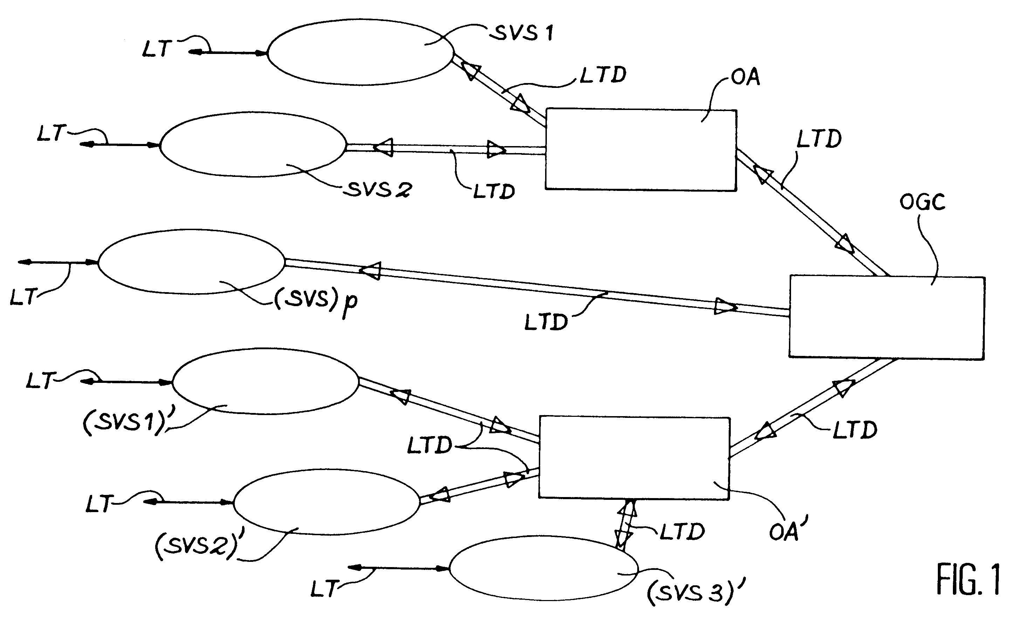

Le système représenté sur la figure 1 comprend des serveurs vocaux interactifs spécialisés dans un service, soit SVS1, SVS2 pour un premier service et (SVS1)′, (SVS2)′, (SVS3)′ pour un second service. Chaque serveur est relié à une ligne téléphonique LT. Affilié à chaque service, un ordinateur (OA), (OA)′ est relié aux serveurs par une ligne de transmission de données LTD. Un ordinateur OGC gère les comptes des utilisateurs du service et des prestataires de service. Il est relié aux deux ordinateurs affiliés OA et OA′.

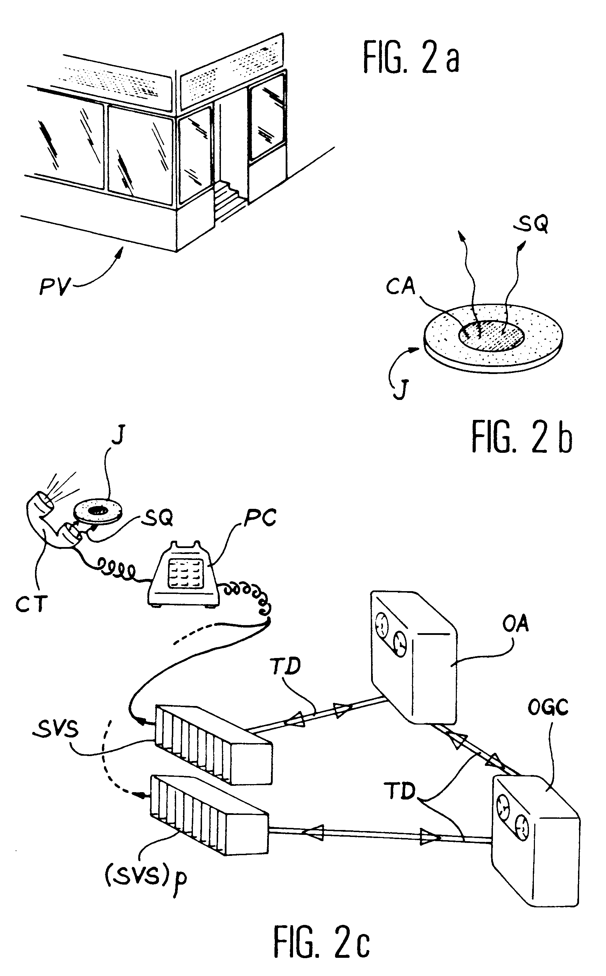

Les figures 2a, 2b, 2c illustrent le fonctionnement du système dans le cas où il s'agit de prendre des paris sur des courses de chevaux (PMU) et dans le cas où le dispositif électronique portatif est un jeton du type de celui qui est décrit dans la demande de brevet parallèle citée plus haut.

Les jetons sont vendus et rachetés dans un point de vente PV (figure 2a). Chaque jeton J (figure 2b) se présente sous la forme d'une rondelle en plastique ou en résine marquée d'une valeur de 500, 1000 ou 2000F par exemple et d'une date de péremption, par exemple 6 mois après la date de mise en service. Cette rondelle est équipée d'un coupleur acoustique CA qui lui permet, lorsqu'on appuie sur un bouton poussoir (non visible sur la figure 2b), d'émettre une séquence de chiffres SQ caractéristique du jeton et garantissant, avec une probabilité de l'ordre de 1 sur 10 milliards, qu'il appartient bien au système. Cette émission est possible pendant toute la durée de vie du jeton jusqu'à sa date de péremption.

En fonctionnement (figure 2c), un tel jeton est disposé en regard du microphone d'un combiné téléphonique CT.

Un joueur ayant acheté un tel jeton pour 1000 francs par exemple dans un point de vente, il appelle un serveur SVS de prise de paris. Ce serveur lui permet de définir son jeu à l'aide du poste à clavier PC à fréquences vocales. Pour valider ce pari, le joueur approche son jeton du micro du combiné téléphonique et appuie sur le bouton poussoir. Le jeton émet une séquence SQ.

Le serveur SVS transforme ce signal acoustique en une suite de données informatiques qu'il transmet par le réseau TRANSPAC TD avec le pari, au calculateur OA affilié au PMU. Celui-ci vérifie la cohérence du pari, calcule le montant joué et transmet à l'ordinateur de gestion de comptes OGC la séquence SQ, le montant du pari et un numéro de l'opération.

L'ordinateur de gestion de comptes OGC décrypte la séquence SQ. Il vérifie que le jeton appartient bien au système et calcule son numéro d'identification N. S'il ne connaît pas ce numéro, parce que le jeton est utilisé pour la première fois, il ouvre un nouveau compte et y affecte un crédit de départ égal à 1000 F. S'il connaît le numéro N, le crédit existe déjà. Ce crédit est débité du montant du pari et le compte du PMU est crédité du montant du pari. Un message est envoyé en retour à l'ordinateur OA du PMU lui indiquant que l'opération s'est bien passée, ou que le jeton est faux, ou que le compte n'est pas assez approvisionné pour le pari. Les informations sont renvoyées au serveur SVS pour information du parieur.

L'ordinateur OGC bloque ensuite le compte du jeton, pendant un certain temps, quelques minutes par exemple. Ce bloquage a pour but d'attendre que le jeton, qui comprend une horloge changeant la séquence SQ, ait programmé une autre séquence. Il n'est donc pas possible de faire plusieurs transactions avec la même séquence SQ.

Si le pari était gagnant, l'ordinateur OA du PMU avertit l'ordinateur de gestion des comptes OGC que le pari portant tel numéro gagne telle somme. L'ordinateur OGC qui est capable de faire le lien entre le numéro d'opération et le numéro du compte N crédite le compte N et débite le compte PMU.

Lorsque le joueur considère que son compte, dont on lui fournit le montant chaque fois qu'il s'identifie, atteint un niveau suffisant, il peut revendre son jeton à toute personne qui devient alors détentrice du montant du compte N. Les deux participants à la transaction se renseignent en appelant un numéro spécial correspondant à un serveur interactif (SVS)p (figure 2c) particulier donnant seulement la position des comptes, serveur qui appelle directement l'ordinateur de tenue des comptes OGC, celui-ci fournissant la dernière valeur du compte.

Avant que le jeton n'atteigne sa date de péremption et ne s'éteigne, son propriétaire doit se rendre dans un établissement spécialisé qui lui rachète le jeton et le détruit. De toute façon, l'ordinateur OGC détruit les comptes ouverts depuis plus de 6 mois.

On observera que, dans ces opérations, l'anonymat est toujours respecté.

Naturellement, cet exemple d'application du système de l'invention n'est donné qu'à titre explicatif. Le système peut être utilisé pour payer d'autres services, pourvu que ceux-ci aient un compte ouvert auprès de l'ordinateur OGC. Par exemple, on peut imaginer qu'un organisme comme SVP en France, qui vend des renseignements par l'intermédiaire d'opératrices, adhère au système. Dans ce cas, le serveur vocal SVS ne serait connecté que pendant une partie de la communication téléphonique pour recevoir le signal du jeton et le transmettre à l'ordinateur OGC. Un dialogue peut s'instaurer au cours duquel l'opératrice indique à son client que, pour en savoir plus, cela lui coûtera 100F ; si celui-ci est d'accord, on lui passe le serveur vocal pour payer. En cas d'aquiescement du client, avec un petit terminal, l'opératrice tape 100F, le serveur vocal recueille la séquence SQ du client, la transmet à l'ordinateur affilié SVP qui y ajoute les 100F. Cet ordinateur envoie le tout avec le numéro de compte de SVP à l'ordinateur OGC pour que le compte de SVP soit crédité de 100F et celui du jeton débité de 100F.

## Revendications

1. Système de paiement de services par téléphone, caractérisé par le fait qu'il comprend :
- des dispositifs électroniques portatifs (J) ayant chacun une identité, une valeur nominale et une date de péremption, chaque dispositif étant capable d'émettre, sur commande de l'utilisateur, une séquence cryptée de tonalités acoustiques (SQ), cette séquence étant caractéristique de l'identité du dispositif, de la date d'utilisation et d'un service,
- des serveurs vocaux spécialisés dans un service particulier (SVS1, (SVS1)′) et reliés à une ligne téléphonique (LT), ces serveurs pouvant être appelés par téléphone par un utilisateur et étant capables de recevoir la séquence cryptée (SQ) de tonalités acoustiques émise par le dispositif électronique portatif (J) de l'utilisateur appelant et de traduire cette séquence (SQ) en données informatiques,
- au moins un ordinateur affilié à un service particulier (OA, OA′) et relié aux serveurs vocaux (SVS1, (SVS)′) spécialisé dans ce service par une ligne de transmission de données informatiques (LDT), cet ordinateur étant apte à définir une transaction correspondant au service en question,
- un ordinateur de gestion de comptes (OGC), ces comptes correspondant, d'une part, aux différents prestataires de service et, d'autre part, aux différents dispositifs électroniques portatifs (J) en service, cet ordinateur de gestion de comptes étant relié aux ordinateurs affiliés aux différents services (OA1, 0A2) par des lignes de transmission de données (TD′, TD˝) d'où il reçoit, pour chaque transaction à effectuer la séquence de données cryptées propre au dispositif électronique utilisé ainsi que les caractéristiques de la transaction à effectuer, cet ordinateur de gestion de comptes (OGC) étant apte à décrypter la séquence de données qu'il reçoit, à identifier le compte correspondant et à débiter ou créditer celui-ci selon la transaction à effectuer.

2. Système selon la revendication 1, caractérisé par le fait que l'ordinateur de gestion de comptes (OGC) crée, lors de la première utilisation d'un dispositif électronique portatif (J), un compte affecté à ce dispositif au crédit duquel il porte la valeur nominale du dispositif et auquel il affecte une date de fermeture qui est la date de péremption du dispositif.

3. Système selon la revendication 1, caractérisé par le fait que l'ordinateur de gestion des comptes (OGC) n'accepte, pour chaque dispositif portatif, qu'une seule transaction définie par les ordinateurs affiliés pendant toute la durée où le dispositif émet une même séquence cryptée (SQ).

4. Système selon la revendication 1, caractérisé par le fait qu'il comprend en outre au moins un serveur vocal interactif directement relié à l'ordinateur de gestion de comptes (OGC), ce serveur permettant seulement de donner à l'utilisateur appelant la position du compte correspondant au dispositif portatif utilisé (J).

## Patentansprüche

1. System zum Bezahlen von Dienstleitungen per Telefon, **dadurch gekennzeichnet,** daß es umfaßt:
- tragbare elektronische Vorrichtungen (J), wovon jede eine Identität, einen Nominalwert und ein Ablaufdatum hat, wobei jede Vorrichtung fähig ist, auf Verlangen des Benutzers, eine verschlüsselte Sequenz von akustischen Zeichen (SQ) auszusenden, wobei diese Sequenz charakteristisch ist für die Identität der Vorrichtung, das Benutzungsdatum und eine Dienstleistung,
- Vokal-Server, spezialisiert auf eine bestimmte Dienstleistung (SVS1, (SVS1)′) und verbunden mit einer Telefonleitung (LT), wobei diese Server per Telefon angerufen werden können durch einen Benutzer und imstande sind, die verschlüsselte Sequenz (SQ) aus akustischen Zeichen zu empfangen, die ausgesandt wurde durch die tragbare elektronische Vorrichtung (J) des anrufenden Benutzers, und diese Sequenz in Informatikdaten zu übersetzen,
- wenigstens einen Rechner, einer speziellen Dienstleistung (OA, OA′) zugehörig und mit den auf diese Dienstleistung spezialisierten Vokal-Servern (SVS1, (SVS)′) verbunden über eine Informatikdaten-übertragungsleitung (LDT), wobei dieser Rechner fähig ist, eine Transaktion der betreffenden Dienstleistung entsprechend zu definieren,
- einen Kontenverwaltungsrechner (OGC), wobei diese Konten einerseits den verschiedenen Dienstleistungserbringern entsprechen und andrerseits den verschiedenen, im Einsatz befindlichen tragbaren elektronischen Einrichtungen (J), wobei dieser Kontenverwaltungsrechner über Datenübertragungsleitungen (TD′, TD˝) verbunden ist mit den Rechnern, die den verschiedenen Dienstleistungen (OA1, OA2) zugehörig sind, von wo er für jede auszuführende Transaktion die verschlüsselte Datensequenz erhält, die charakteristisch ist für die benutzte elektronische Vorrichtung, sowie die Charakteristika der auszuführenden Transaktion, wobei dieser Kontenverwaltungsrechner (OGC) imstande ist, die Datensequenz, die er erhält, zu entschlüsseln, das entsprechende Konto zu identifizieren und dieses zu belasten oder zu kreditieren, entsprechend der auszuführenden Transaktion.

2. System nach Anspruch 1, dadurch gekennzeichnet, daß der Kontenverwaltungsrechner (OGC) bei der ersten Benutzung einer tragbaren elektronischen Vorrichtung (J) ein dieser Vorrichtung zugeordnetes Konto eröffnet, auf dessen Habenseite er den Nominalwert der Vorrichtung verbucht und dem er ein Schlußdatum zuordnet, welches das Ablaufdatum der Vorrichtung ist.

3. System nach Anspruch 1, dadurch gekennzeichnet, daß der Kontenverwaltungsrechner (OGC) für jede tragbare Einrichtung während der gesamten Dauer, während der die Vorrichtung ein und dieselbe verschlüsselte Sequenz (SQ) aussendet, nur eine einzige, durch die angegliederten Rechner definierte Transaktion akzeptiert.

4. System nach Anspruch 1, dadurch gekennzeichnet, daß es außerdem wenigstens einen interaktiven Vokal-Server umfaßt, direkt verbunden mit dem Kontenverwaltungsrechner (OGC), wobei dieser Server nur erlaubt, dem anrufenden Benutzer den der benutzten tragbaren Vorrichtung (J) entsprechenden Kontostand anzugeben.

## Claims

1. Telephone service payment system, characterized in that it comprises:
- portable electronic devices (J) each having a specific identity, a face value and a time limitation date, each device being able to transmit when ordered by the user a coded sequence of acoustic tones (SQ), this sequence being characteristic of the identity of the device, the date of use and a particular service,
- specialized vocal host computers in a particular service (SVS1, SVS1′) and connected to a telephone line (LT), these host computers being able to be telephoned by the user and able to receive the coded sequence (SQ) of acoustic tones transmitted by the portable electronic device (J) of the calling user and to translate this sequence into data processing data,
- at least one computer affiliated to a particular service (OA, OA′) and connected to the specialized vocal host computers (SVS1, SVS1′) in this service by means of a data processing data transmission line (LDT), this computer being able to define a transaction corresponding to the service in question,
- an accounts management computer (OGC), these accounts corresponding firstly to the various service suppliers, and secondly to the various portable electronic devices (J) in service, this accounts management computer being connected to the computers affiliated to the various services (OA1, OA2) by data transmission lines (TD′, TD˝) from which it receives for each transaction to be effected the sequence of coded data belonging to the electronic device used, as well as the characteristics of the transaction to be effected, this accounts management computer (OGC) being able to decode the sequence of data it receives, identify the corresponding account and to debit or credit the latter according to the transaction to be effected.

2. System according to claim 1, characterized in that the accounts management computer (OGC) creates during the first use of a portable electronic device (J) an account allocated to this device with the credit bearing the face value of the device and a closing date, namely the time limitation date of the device.

3. System according to claim 1, characterized in that the accounts management computer (OGC) only accepts for each portable device a single transaction defined by the affiliated computers throughout the period in which the device transmits a given coded sequence (SQ).

4. System according to claim 1, characterized in that it further includes at least one interactive vocal host computer directly connected to the accounts management computer (OGC), this host computer only providing the caller user with the position of the account corresponding to the portable device (J) used.
